(19) Europäisches Patentamt
European Patent Office
Office européen des brevets

(11) EP 1 586 680 A2

(12) **EUROPEAN PATENT APPLICATION**

(43) Date of publication:
**19.10.2005 Bulletin 2005/42**

(51) Int Cl.[7]: **C25D 21/12**

(21) Application number: **04029581.8**

(22) Date of filing: **14.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **30.03.2004 JP 2004099632**

(71) Applicant: **YAMAMOTO-MS Co., Ltd.**
**Tokyo (JP)**

(72) Inventor: **Yamamoto, Wataru**
**Shibuya-ku, Tokyo (JP)**

(74) Representative: **Strehl Schübel-Hopf & Partner**
**Maximilianstrasse 54**
**80538 München (DE)**

(54) **Program and system for measuring internal stress of an electroplated film**

(57) In order to measure a plating internal stress, the plating internal stress measurement program in a plating internal stress measurement system (1) makes a computer (10) function as: a plating condition input mechanism for inputting a plating condition; a calculation formula data memory mechanism that memorizes in advance film thickness calculation formula data for calculating a plating film thickness and stress calculation formula data for calculating a plating internal stress; a film thickness calculation mechanism for reading the film thickness calculation formula data and calculating the plating film thickness at each timing during plating; a stress calculation mechanism for reading the stress calculation formula data and calculating the plating internal stress at the each timing during the plating; a stress data memory mechanism for memorizing the plating internal stress; and a stress output mechanism for outputting the plating internal stress calculated at the each timing during the plating.

FIG.1

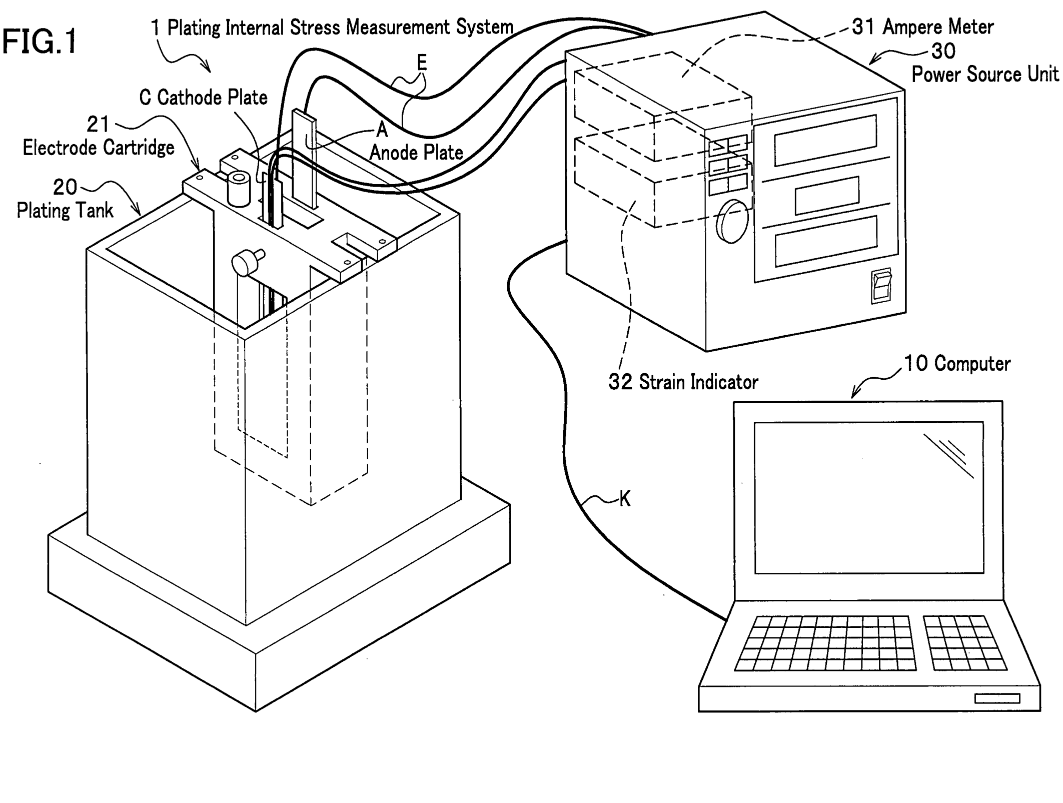


EP 1 586 680 A2

## Description

### BACKGROUND OF THE INVENTION

### 1. FIELD OF THE INVENTION

The present invention relates to a plating internal stress measurement program and plating internal stress measurement system used for a measurement of a plating-film internal stress (hereinafter abbreviated as "plating internal stress" as needed), using a strain gauge, and is mainly used for a study, testing, production, and production control of electroplating.

### 2. DESCRIPTION OF THE RELATED ART

Conventionally, as a system for controlling a plating condition and result of electroplating is disclosed a control system of the electroplating as shown in paragraphs 0007 to 0010 and FIG. 2 of Japanese Patent Laid-Open Publication No. 2002-302800. In performing the electroplating, in order that a plating film matching a purpose is formed, it is necessary to adequately set a kind of plating liquid; a temperature, pH, and concentration of the plating liquid; a material, surface area, and weight of a plated object; a current system, current value, current density, current passing time, accumulation current value, current efficiency, and the like in performing the electroplating. The control system of the electroplating can efficiently control these conditional setting, predict a thickness of the plating film, measure/record the current value during the plating, analyze a result, and calculate the film thickness after a lapse of predetermined time.

On the other hand, a method is studied that uses a principle of a strain gauge and thereby measures a plating internal stress, and this is described in a non patent document 1, "Development of the Measuring System for Mean Internal Stress in Nickel Film Plated on Copper Substrate" (presented in "Electrochemistry and Industrial Physicochemistry" published by the Institute of Electronics, Information and Communication Engineers, September 1992, vol. 60, No. 9, p. 780-784, written by Yutaka TSURU et al.).

The method attaches a strain gauge for measuring a strain of a base metal from a change of an electric resistance accompanying a deformation of the base metal to a back face of a cathode plate, thereby measures a strain (minuscule deformation) of the cathode plate due to an internal stress of a plating film, and calculates the plating internal stress from the strain and a thickness of the plating film.

In this connection, accompanying a progress and development of IT (Information Technology) in these years, miniaturization and high functioning of electronic components are progressing. And a high quality and performance is becoming to be requested also for a plating film dispensed to such the electronic components.

For example, if when dispensing plating to a thin film member of a several microns thickness, an internal stress occurs in a plating film, some thin film member results in curling due to the plating internal stress. In addition, when forming a very thin plating film, there occurs some crack in the plating film itself.

In addition, in order to know a property and crystal structure of a plating film, there occurs a need for investigating a change of the internal stress of the plating film over time in detail.

From these matters, in forming the plating film, it is becoming very important to accurately measure and control the plating internal stress.

However, because although a conventional electroplating control system can calculate the thickness of the plating film from the plating conditions and the accumulation current value, it is not equipped with a sensor for obtaining data (for example, a strain amount of a plated object and the like) regarding a stress of the plating film, it cannot measure the plating inner force.

On the other hand, although a conventional "method for measuring an internal stress, using a principle of a strain gauge" can measure the strain amount of the plated object at each timing during plating, it cannot measure the plating internal stress in real time at the each timing during the plating.

In other words, the plating internal stress in completion of the plating can be calculated through any value of a thickness and weight of the plating film in the completion thereof, actually measuring a plated object after end of the plating and obtaining the thickness and weight. But the plating internal stress at the each timing during the plating cannot be obtained in real time because it is obtained by nothing but calculating back a film thickness at the each timing during the plating through a proportional calculation from the film thickness in the completion of the plating and using the back-calculated film thickness.

Therefore, there is a problem that in the course of performing the electroplating, the plating internal stress cannot be grasped and controlled; and thereby, finally a plated object curls and/or a crack results in occurring in a plating film.

Consequently, it is strongly requested that a plating internal stress measurement program and plating internal stress measurement system can accurately/ easily measure the plating film internal stress in real time.

### SUMMARY OF THE INVENTION

A first aspect of the present invention is a plating internal stress measurement program in a plating internal stress measurement system that comprises a plating tank for reserving plating liquid; a cathode plate and an anode plate immersed in the plating liquid; a power source unit for passing a current through the cathode plate and the anode plate; an ampere meter for measuring the current passed through the cathode plate and the anode plate and obtaining the current at each timing during plating as current data; a strain gauge attached to a back face of a plated portion formed on the cathode plate; a strain indicator that is connected to the strain gauge, measures a strain amount of the cathode plate, and obtains the strain amount at the each timing during the plating as strain data; and a computer connected to the ampere meter and the strain indicator, wherein in order to measure a plating internal stress, the program makes the computer function as: a plating condition input mechanism for inputting a plating condition; a calculation formula data memory mechanism that memorizes in advance film thickness calculation formula data for calculating a plating film thickness from the plating condition and the current data, and stress calculation formula data for calculating a plating internal stress from the plating film thickness, which is calculated according to the film thickness from the plating condition, and the strain data; a film thickness calculation mechanism for reading the film thickness calculation formula data from the calculation formula memory mechanism and calculating the plating film thickness at the each timing during the plating, based on the plating condition and the current data at the each timing during the plating; a stress calculation mechanism for reading the stress calculation formula data from the calculation formula memory mechanism and calculating the plating internal stress at the each timing during the plating, based on the plating condition, the strain data at the each timing during the plating, and the calculated film thickness data; a stress data memory mechanism for memorizing the plating internal stress, which is calculated at the each timing during the plating by the stress calculation mechanism, as stress data; and a stress output mechanism for outputting the plating internal stress calculated at the each timing during the plating by the stress calculation mechanism.

In accordance with such the configuration, if the plating internal stress measurement program runs, the computer for the plating internal stress measurement system functions as the plating condition input mechanism. Thus the plating condition is input to the plating internal stress measurement system through the plating condition input mechanism.

And the plating (current passing) is started, and if the ampere meter and the strain indicator start the measurement of the current data and the strain data, the computer functions as the film thickness calculation mechanism. In other words, by the film thickness calculation mechanism is read the film thickness calculation data memorized in advance in the calculation data memory mechanism, and then the film thickness data at the each timing during the plating is calculated.

At this time the computer also functions as an output mechanism, for example, outputs the film thickness data in a graph on a display in real time.

And if the film thickness data is memorized in the film thickness data memory mechanism, the computer functions as the plating internal stress calculation mechanism. In other words, by the plating internal stress calculation mechanism is read the internal stress calculation formula data memorized in advance in the calculation formula memory mechanism, and then internal stress data is calculated at the each timing during the plating, based on the plating condition, the strain data, and the film thickness data.

At this time the computer functions as an output mechanism, for example, outputs the plating internal stress data in a graph on the display in real time.

Meanwhile, it is preferable that the plating internal stress measurement program makes the computer function as a physical property value data memory mechanism for memorizing in advance physical property value data regarding the plating liquid and the cathode plate; and makes the computer function so as to be able to read a list of the physical property value data out of the physical property value data memory mechanism, to display the list on the display, and to select the plating condition out of the list when making the computer function as the plating condition input mechanism. Thus it becomes extremely easy to set and control the plating condition.

A second aspect of the present invention is, in the first aspect thereof in order to measure a plating internal stress, a plating internal stress measurement program for making the computer function as a compensation condition input mechanism for inputting a compensation condition based on any actual measurement value of a plating film thickness and plating film weight after completion of plating; a compensation formula data memory mechanism for memorizing in advance compensation data for compensating the plating internal stress, based on the compensation condition; a stress compensation mechanism for reading the compensation formula data from the compensation formula data memory mechanism and compensating the plating internal stress at each timing during plating calculated by the stress calculation mechanism, based on the compensation condition; a compensation stress data memory mechanism for memorizing the plating internal stress at the each timing during the plating compensated by the stress compensation mechanism; and a compensation stress output mechanism for outputting the plating internal stress, which is compensated at the each timing during the plating by the stress compensation mechanism, as compensation stress data.

In accordance with such the configuration, if the plating internal stress measurement program runs, the computer for the plating internal stress measurement system functions as the compensation condition input mechanism for inputting the compensation condition based on any measurement value of the plating film thickness and the plating film weight after the completion of the plating. Thus the compensation condition is input to a plating internal stress system through the compensation condition input mechanism.

If the "compensation condition" is data that can derive "current efficiency" of a ratio of theoretical value and actual measurement value of any of the plating film thickness and the plating film weight, anything is available: It may be designed so that any of a deposited plating film thickness and plating film weight is input and so that the "current efficiency" can be directly input.

If the compensation condition is input, the computer functions as the stress data compensation mechanism and the compensation stress data memory mechanism. In other words, the compensation data, which is memorized in advance in the compensation formula data memory mechanism, is read by the stress data compensation mechanism; and the compensation stress data is calculated, based on the compensation condition. And the compensation stress data is memorized by the compensation stress data memory mechanism.

In addition, the computer functions as the output mechanism, for example, outputs the compensation plating internal stress data in a graph on the display in real time.

Meanwhile, when plating is performed in a same condition in the past, and an obtained compensation condition based on any of a plating film and plating weight measured in completion of the plating is memorized, related to the plating condition, it is preferable that the plating internal stress measurement program omits to make the computer function as the compensation condition input mechanism and makes it function as the plating internal stress data compensation mechanism and the compensation plating internal stress data memory mechanism. Thus from second times it is enabled to measure the plating internal stress after a compensation in real time.

Meanwhile, in order to measure the plating internal stress, it is preferable that the plating internal stress measurement program makes the computer further function as a film thickness expectation mechanism for reading the film thickness calculation formula data from the calculation formula data memory mechanism and calculating a plating film thickness expectation value at the each timing during the plating, based on the plating condition, and as an output mechanism for outputting the plating film thickness expectation value. Thus, before actually performing the plating, it is enabled to know the plating film thickness expectation value at the each timing during the plating and to obtain a determination basis of whether or not the plating should be performed under the plating condition.

A third aspect of the present invention is a plating internal stress measurement system that comprises a plating tank for reserving plating liquid; a cathode plate and an anode plate immersed in the plating liquid; a power source unit for passing a current through the cathode plate and the anode plate; an ampere meter for measuring the current passed through the cathode plate and the anode plate and obtaining the current at each timing during plating as current data; a strain gauge attached to a back face of a plated portion formed on the cathode plate; a strain indicator that is connected to the strain gauge, measures a strain amount of the cathode plate, and obtains the strain amount at the each timing during the plating as strain data; a plating condition input mechanism for inputting a plating condition; a calculation formula data memory mechanism that memorizes in advance film thickness calculation formula data for calculating a plating film thickness from the plating condition and the current data, and stress calculation formula data for calculating a plating internal stress from the plating film thickness, which is calculated according to the film thickness from the plating condition, and the strain data; a film thickness calculation mechanism for reading the film thickness calculation formula data from the calculation formula memory mechanism and calculating a plating film thickness at the each timing during the plating, based on the plating condition and the current data at the each timing during the plating; a stress calculation mechanism for reading the stress calculation formula data from the calculation formula memory mechanism and calculating the plating internal stress at the each timing during the plating, based on the plating condition, the strain data at the each timing during the plating, and film thickness data calculated by the film thickness calculation mechanism; a stress data memory mechanism for memorizing the plating internal stress, which is calculated at the each timing during the plating by the stress calculation mechanism, as stress data; a stress output mechanism for outputting the plating internal stress calculated at the each timing during the plating by the stress calculation mechanism; and a control mechanism for controlling each of the mechanisms.

In addition, a fourth aspect of the present invention is, in the third aspect of the invention, a plating internal stress measurement system that comprises a compensation condition input mechanism for inputting a compensation condition based on any actual measurement value of a plating film thickness and plating film weight after completion of plating; a compensation formula data memory mechanism for memorizing in advance compensation data for compensating the plating internal stress, based on the compensation condition; a stress compensation mechanism for reading the compensation formula data from the compensation formula data memory mechanism and compensating the plating internal stress calculated by the stress calculation mechanism at each timing during plating, based on the compensation condition; a compensation stress data memory mechanism for memorizing the plating internal stress compensated by the stress compensation mechanism at the each timing during the plating, as compensation stress data; and a compensation stress output mechanism for outputting the plating internal stress compensated by the stress compensation mechanism at the each timing during the plating.

## BRIEF DESCRIPTION OF THE DRAWINGS

FIG. 1 is a general drawing showing a plating internal stress measurement system where a plating internal stress measurement program related to an embodiment of the present invention is used.

FIG. 2 is a block diagram showing the plating internal stress measurement system.

FIG. 3 is a system configuration showing a plating internal stress measurement system.

FIG. 4 is a flowchart showing a procedure in measuring a plating internal stress, using a plating internal stress measurement program related to an embodiment of the present invention.

FIG. 5 is a drawing showing an input form setting.

FIG. 6 is a drawing showing the input form setting in detail.

FIG. 7 is a drawing showing an expectation form.

FIG. 8 is a drawing showing a present value display form for displaying a present plating film thickness.

FIG. 9 is a drawing showing a present value display form for displaying a present plating internal stress.

FIG. 10 is a drawing showing a calculation-result-numeric form.

FIG. 11 is a drawing showing a result display form for displaying a calculation result of a plating film thickness.

FIG. 12 is a drawing showing a result display form for displaying a calculation result of a plating internal stress.

FIG. 13 is a drawing showing a result display form for displaying a compensation result of a plating internal stress.

## DESCRIPTION OF THE PREFERRED EMBODIMENTS

Here will be described a plating internal stress measurement system where a plating internal stress measurement program related to the present invention is applied, as a most preferred embodiment in detail, referring to drawings.

Firstly will be described a configuration of the plating internal stress measurement system where the plating internal stress measurement program of the present invention is used, referring to the general drawing of FIG. 1, the block diagram of FIG. 2, and the system configuration of FIG. 3.

A plating internal stress measurement system 1 comprises a plating tank 20 where a cathode plate C and an anode plate A are placed, a power source unit 30 for supplying a current to the cathode plate C and the anode plate A, and a computer 10 connected to the power source unit 30.

The plating tank 20 is a tube-form water tank with a bottom, and plating liquid is reserved in a hollow portion thereof. Each of the cathode plate C and the anode plate A is an electrode formed of a conducting material and formed into an elongate plate form (like a strip), is arranged so as to face each other by an electrode cartridge 21, and an lower end thereof is immersed in the plating tank.

On a lower end of one face (face at a side of the anode plate A) of the cathode plate C is formed a plated portion, and if a current is passed to the both electrodes, a plating film is designed to deposit on the plated portion. In addition, to a lower end of the other face (back face of the plated portion) of the cathode plate C is attached a strain gauge HG (see FIG. 2), and a deformation (strain amount) of the cathode plate C due to an internal stress of the plating film is designed to be measured. Because the strain gauge HG can measure the deformation of a level of $1/10^6$, it can measure a very minuscule deformation of the cathode plate C (plated portion).

The power source unit 30 is a device for passing a predetermined current between the cathode plate C and the anode plate A and is designed to be able to adjust a current value and current passing time, based on a current passing plan set in the computer 10 described later. The power source unit 30 is connected to each of the cathode plate C and the anode plate A through power source cables E. In addition, the power source unit 30 comprises an ampere meter 31 and is designed to be able to measure a current value actually passed through the cathode plate C and the anode plate A. Furthermore, in the embodiment the power source unit 30 comprises a strain indicator 32, is connected to the strain gauge HG attached to the cathode plate C, and thus is designed to be able to measure the strain amount of the cathode plate C.

The computer 10 comprises, as shown in FIG. 2, a computer main body 11, an input device 12, and an output device 13. The computer 10 is connected to the power source unit 30 through a cable K, controls the power source unit 30, based on the current passing plan, and obtains/saves the current value and the strain data measured by the ampere meter 31 and the strain indicator 32. The input device 12 consists, for example, of a keyboard and a mouse and is used for an input and change of a plating condition, a selection of a display screen, and the like. The output device 13 consists, for example, of a display and is used for a display of an input screen and that of a measurement result of a plating film thickness and an internal stress.

As shown in FIG. 3, the computer main body 11 comprises a central processing unit 11A, a program memory 11B, and a data memory 11C. To the computer main body 11 are connected the input device 12, the output device 13, the ampere meter 31, and the strain indicator 32 through an input/output control unit not shown; and the computer main body 11 is designed so as to be able to obtain the measurement data and the plating condition and to output a calculation result.

The central processing unit 11A is a unit for running a program memorized in the program memory 11B, receives data from the input device 11 and each of the memories 11B and 11C, and upon performing a calculation/processing, outputs the data to the output device 13 and the data memory 11C. In addition, the central processing unit 11A cooperates a control program 11Ba described later, whereby it functions as a "control mechanism."

In the program memory B is memorized the control program 11Ba for making the computer 10 function as a plating condition input mechanism, a calculation formula data memory mechanism, a film thickness calculation mechanism, a stress calculation mechanism, a calculation data memory mechanism, various data output mechanisms, a compensation condition input mechanism, a film thickness data compensation mechanism, and a stress data compensation mechanism. Meanwhile, each of the mechanisms will be described in detail in a description of an operation of the plating internal stress measurement system 1 described later.

The data memory 11C comprises a calculation condition data file 11Ca for memorizing a plating condition and various calculation formulas, a measurement data file 11Cb for memorizing current data and strain data at each timing during plating measured by the ampere meter 31 and the strain indicator 32, and a calculation result data file 11Cc for memorizing film thickness data, stress data, compensation film thickness data, and compensation stress data.

The calculation condition data file 11Ca memorizes in advance film thickness calculation formula data for calculating a film thickness from a plating condition input by the plating condition input mechanism and current data measured by the ampere meter 31; and stress calculation formula data for calculating a plating internal stress from strain data measured by the strain indicator 32, the calculated film thickness, and the input plating condition.

As a film thickness calculation formula (film thickness calculation formula data) can be used a known film thickness calculation formula that calculates a film thickness from a plating condition and an accumulation current value.

In addition, as an internal stress calculation formula (stress calculation formula data) can be used, for example, a following formula (1):

$$\sigma = Et^2\ \delta/\{3\ (1 - \nu)\ dl^2\}, \qquad (1)$$

where $\sigma$, an internal stress of a plating film; 1, a length of a plated portion of a cathode plate; E, a Young's modulus; $\nu$, a Poisson's ratio of the cathode plate; $\delta$, a bending amount of the cathode plate; and d, a film thickness of the plating film.

Other than that, in the calculation condition data file 11Ca is in advance memorized physical property value data of various plating liquid and that of various plated objects (electrode plate C). In addition, the plating condition input by the plating condition input mechanism is also designed to be memorized in the calculation condition data file 11Ca. Furthermore, in the calculation condition data file 11Ca is memorized compensation formula data used in compensating a plating film thickness and a plating internal stress, based on any of a plating film thickness and actual measurement weight after completion of plating.

The measurement data file 11Cb memorizes current data and strain data measured by the ampere meter 31 and the strain indicator 32 at each timing during plating.

The calculation result data file 11Cc memorizes film thickness data and stress data calculated by the film thickness calculation mechanism and the stress calculation mechanism, respectively, at each timing during plating. In addition, when a compensation condition is input, and compensation film thickness data and compensation stress data at each timing during plating are calculated by the film thickness data compensation mechanism and the stress data compensation mechanism, the calculation result data file 11Cc is designed to memorize these, too.

Subsequently, an operation of the plating internal stress measurement system 1 will be described, referring to the flowchart of FIG. 4 and input/output forms shown in FIGS. 5 to 13.

[Plating Condition Input Step]

If the plating internal stress measurement system 1 is activated, the central processing unit 11A of the computer 10 receives an instruction of the control program 11Ba, reads a set input form (see FIG. 5) from the data memory 11C, displays it on a display (output device 13), and receives a plating condition input from a keyboard and a mouse (input device 12) (step S101). In other words, the computer 10 is made to function as the "plating condition input mechanism" by the control program 11Ba.

As shown in FIG. 5, as general items there are a "name" 5a, a "date" 5b, a "file save name" 5c, an "inscriber" 5d, and a "plating liquid name" 5e displayed on an upper portion of a screen. In addition, at a left side of a lower portion of the screen is displayed a "comment column" 5f, and in the "comment column" 5f can be input a comment as needed.

As the plating condition there are a "plating liquid kind" 5g, a "plating goods condition" 5h, and a "plating condition" 5i. As shown in FIG. 6A, the "plating liquid kind" 5g is designed to be able to be selected from the "plating liquid kind" registered in a dialogue box in advance by opening the dialogue box. In addition, as shown in FIG. 6B, opening an input dialogue box of a "new plating liquid setting," it is also enabled to newly set a physical property value of the plating liquid. In the "plating goods condition" 5h there is each item of a "name" 5k, a "material" 51, a "surface area" 5m, a "before-plating weight" 5n, a "Poisson's ratio (ν)" 5u, a "Young's modulus (E)" 5v, a "length (1)" 5w, and a "thickness (t)" 5x. Meanwhile, a unit of the "surface area" 5m is selected from a dialogue box provided at a right side thereof. In the "plating condition" 5i there is each item of a "set temperature" 5o, a maximum current value" 5p, a "plating time" 5q, and a "variation current system setting" 5r, and at a right side of a lower portion of the screen is displayed a "current value" 5s in a graph. In addition, by clicking a tab, as shown in FIG. 6C, it is also enabled to display an "accumulation current value" 5t instead of the "current value" 5s. Meanwhile, the "accumulation current value" 5t is automatically calculated.

These plating conditions are memorized in the calculation condition data file 11Ca of the data memory 11C.

[Film Thickness Expectation Step]

After inputting various plating conditions, if clicking an expectation display button of the set input form, the central processing unit 11A receives an instruction of the control program 11B, reads the film thickness calculation formula data from the calculation condition data file 11Ca, and calculates a film thickness expectation value (expectation film thickness data) of a plating film at each timing during plating, based on the input plating conditions (step S102). In other words, the computer 10 is made to function as the "film thickness expectation mechanism" by the control program 11Ba.

Meanwhile, the film thickness calculation formula data is memorized in the calculation condition data file 11Ca of the data memory 11C at the timing of the plating internal stress measurement program being installed in the computer main body 11. In addition, the stress calculation formula data and the compensation formula data are simultaneously memorized. In other words, the computer 10 is made to function as the "calculation formula data memory mechanism" by the installation of the plating internal stress measurement program.

In addition, in the embodiment expectation plating weight is also calculated from the plated portion area 5m and plated object density (see 5j of FIG. 6B).

[Expectation Film Thickness Output Step]

If the plating film thickness expectation value is calculated at the each timing during the plating, the central processing unit 11A receives an instruction of the control program 11B, reads a result expectation form 6 from a memory, and displays it on the display (see FIG. 7) and the expectation value in a graph (step S103). In other words, the computer 10 is made to function as the "output mechanism" of the expectation film thickness data by the control program 11Ba.

[Plating Performance Determination Step]

And looking into an "expectation film thickness data" 6a displayed in the result expectation form 6, a user determines whether or not to perform plating (step S104). If the user determines not to perform the plating (No in the step S104), he/she returns to the step S101 to again input the plating conditions.

[Current Passing Start Step]

On the other hand, if the user determines to perform the plating (Yes in the step S104), the central processing unit 11A receives an instruction of the control program 11Ba, controls the ampere meter 31 of the power source unit 30, and measures with time a current value passed between the cathode plate C and the anode plate A. In addition, similarly the central processing unit 11A controls the strain indicator 32 and measures a strain amount of the cathode plate C with time, based on data sent from the strain gauge HG attached to the cathode plate C (step S106).

[Current Data/Strain Data Memory Step]

If the measurement of current data and strain data at each timing during plating is started by the ampere meter 31 and the strain indicator 32, the central processing unit 11A receives an instruction of the control program 11Ba and sequentially memorizes the current data and the strain data in the measurement data file 11Cb of the data memory 11C (step S107).

[Film Thickness Calculation Step]

And the central processing unit 11A receives an instruction of the control program 11Ba, reads the film thickness calculation formula data from the calculation condition data file 11Ca, and calculates a present plating film thickness, based on present current data measured by the ampere meter 31 and plating conditions (step S108). In other words, the computer 10 is made to function as the film thickness calculation mechanism by the control program 11Ba.

[Stress Calculation Step]

In addition, the central processing unit 11A receives an instruction of the control program 11Ba, reads the internal stress calculation formula data from the calculation condition data file 11Ca, and calculates a present plating film thickness internal stress, based on present strain data measured by the strain indicator 32, the present film thickness data calculated by the film thickness calculation mechanism, and the plating conditions (step S109). In other words, the computer 10 is made to function as the internal stress calculation mechanism by the control program 11Ba.

[Output Step]

If the present film thickness and plating internal stress are calculated, the central processing unit 11A receives an instruction of the control program 11Ba, reads "present value display forms" 7, 7' from a memory, and displays them on the display (see FIGS. 8 and 9) and the present film thickness and plating internal stress in each graph (step S110). In other words, the computer 10 is made to function as the "output mechanisms" of the present film thickness data and plating internal stress data by the control program 11Ba.

In the "present value display form" 7 of FIG. 8 is displayed an "expectation present plating film thickness" 7a in the graph. A broken line in the graph displays the expectation film thickness data calculated in the film thickness expectation step S102; and a solid line displays the film thickness data calculated in the film thickness data calculation step S108. In addition, in the "present value display form" 7 are displayed a "present current value" 7b, a "present voltage value" 7c, a "present accumulation current value" 7d, a "present liquid temperature" 7e, a "present pH value" 7f, and the like. These values are obtained by various sensors (not shown), sent to the computer main body 11, and displayed.

In addition, in the "present value display form" 7 are also displayed an "expectation present plating weight" 7g and an "expectation present plating internal stress" 7h. In the "present value display form" 7' of FIG. 9, in the graph is displayed the "expectation present plating internal stress" 7h. Thus in accordance with the plating internal stress measurement program related to the present invention, the plating film internal stress can be displayed in real time.

[Calculation Result Memory Step]

If the present film thickness and plating internal stress are calculated, the central processing unit 11A receives an instruction of the control program 11Ba and sequentially memorizes these data in the calculation result data file 11Cc of the data memory 11C (step S111). In other words, the computer 10 is made to function as the "calculation result memory mechanism" for memorizing the present film thickness data and plating internal stress data by the control program 11Ba.

The calculation result data file 11Cc is sequentially memorized in a table as shown in a "calculation result numeric form" 9 of FIG. 10.

[Plating End Determination Step]

If the present plating film thickness and internal stress are memorized, the central processing unit 11A receives an instruction of the control program 11B and determines whether or not to end the plating (step S112). To be more precise, the central processing unit 11A determines whether or not the "plating time" 5q input in the plating input step S101 has lapsed.

[Plating Condition Change Step]

If the present time has not reached the "plating time" 5q (No in the step S112), a user can select whether or not to change the plating conditions (step S113). If when changing the plating conditions (Yes in the step S113), for example, a button 7i of a "current value change form" of the "present value display forms" 7, 7' shown in FIGS. 8 and 9 are clicked, a "current value change form" (not shown) is displayed. And by making the user inputting a current value in such the form, the central processing unit 11A receives a change of a plating condition (step S114). Thus the plating condition is renewed; and hereinafter the power source unit 30 is controlled according to the plating condition (current condition) after the renewal, the plating is performed, and the measurement of the film thickness and the stress is performed (step S106).

If not changing the plating condition (No in the step S113), the user returns to the step S106 as it is and can continue the performance of the plating and the measurement of the film thickness and the stress.

[Current Passing Stop Step]

If the present time has reached the "plating time" 5q (see FIG. 5) (Yes in the step S112), the central processing unit 11A receives an instruction of the control program 11B, controls the power source unit 30, and stops current passing between the cathode plate C and the anode plate A (step S115). Thus the generation of the plating film thickness ends.

[Compensation Determination Step]

After the end of the plating, the user can select whether or not to compensate the result of the plating film thickness and the plating internal stress (step S116). If not compensating the result (No in the step S116), the central processing unit 11A receives an instruction of the control program 11B, reads "result display forms" 8, 8' (see FIGS. 11 and 12) from a memory, displays them on the display, reads the film thickness data and the stress data at the each timing during the plating from the calculation result data file 11Cc, and respectively displays them on the "result display forms" 8, 8' without the compensation (step S122). In other words, the computer 10 is made to function as the "output mechanism" of the calculation result data by the control program 11Ba.

In the "result display form" 8 of FIG. 11, in a graph is displayed a "plating film thickness change" 8a. In addition, by double-clicking a tab can be displayed each of a "current value change" 8b, a "voltage value change" 8c, an "accumulation current value change" 8d, a "liquid temperature change" 8e, a "pH value change" 8f, a "plating weight change" 8g, and a "plating internal stress change" 8h. In the "result display form" 8' of FIG. 12, in a graph is displayed the "plating internal stress change" 8h.

[Compensation Condition Input Step]

If performing a compensation (Yes in the step S116), the user actually measures weight (weight after the plating) of the cathode plate C where a plating film is formed and inputs the weight in a "result input" column 8i of the "result display forms" 8, 8' (step S117). In other words, the computer 10 is made to function as the "compensation condition input mechanism" by the control program 11Ba.

And the central processing unit 11A receives an instruction of the control program 11Ba, subtracts the weight of the cathode plate C before the plating (weight before the plating, see FIG. 4) input in the plating condition input step S101 from the weight of the cathode plate C measured after the plating, and thereby calculates actual weight (actual measurement plating weight) of the plating film after the end of the plating. In addition, from such the actual measurement plating weight, the plated portion area, and the plated object density, the central processing unit 11A calculates an actual film thickness (actual measurement plating film thickness) of the plating film after the end of the plating.

[Film Thickness Data Compensation Step]

If calculating the actual film thickness of the plating film after the end of the plating, the central processing unit 11A receives an instruction of the control program 11Ba, reads the film thickness compensation formula data from the calculation condition data file 11Ca, and compensates the plating film thickness calculated in the film thickness calculation step S108 at the each timing during the plating, based on the actual measurement film thickness (step S118). To be more precise, the central processing unit 11A calculates a ratio ($\gamma=\alpha/\beta$) between an actual plating film thickness ($\alpha$) and a film thickness ($\beta$) at the end of the plating calculated in the film thickness calculation step S108, that is, a current efficiency $\gamma$, multiplies the film thickness data by the current efficiency $\gamma$, and thereby compensates the film thickness data. Thus the compensation film thickness data is calculated.

[Stress Data Compensation Step]

If calculating the compensation film thickness data, the central processing unit 11A receives an instruction of the control program 11Ba, reads the stress compensation formula data from the calculation condition data file 11Ca, and compensates the plating internal stress calculated in the stress calculation step S109 at the each timing during the plating, based on the current efficiency $\gamma$ (step S119). To be more precise, the central processing unit 11A multiplies the stress data by the current efficiency $\gamma$ and thereby compensates the stress data. Thus the compensation stress data is calculated. In other words, the computer 10 is made to function as the "stress compensation mechanism" by the control program 11Ba.

Meanwhile, using the compensation film thickness data, it is also available to calculate the compensation stress data according to the formula (1).

[Film Thickness Data/Stress Data Output Step]

If calculating the compensation film thickness data and the compensation stress data, the central processing unit 11A receives an instruction of the control program 11Ba, reads a result display form from a memory, and displays it on the display and the compensation film thickness data and the compensation stress data in each graph (step S120). In other words, the computer 10 is made to function as the "compensation stress output mechanism" by the control program 11Ba.

FIG. 13 shows the "plating internal stress change" 8h after a compensation displayed in a graph on a "result display form" 8". In addition, in a display column of a "current efficiency" 8j of the "plating internal stress change" 8h after the compensation is displayed the current efficiency $\gamma$.

[Film Thickness Data/Stress Data Memory Step]

In addition, if calculating the compensation film thickness data and the compensation stress data, the central processing unit 11A receives an instruction of the control program 11Ba and memorizes the compensation film thickness data and the compensation stress data in the calculation result data file 11Cc (step S121). In other words, the computer 10 is made to function as the "compensation stress memory mechanism" by the control program 11Ba.

Meanwhile, by relating the current efficiency $\gamma$ to a plating condition then and memorizing it in a memory (for example, the calculation condition data file 11Ca), it is enabled to display in real time the compensation film thickness data and the compensation stress data from the start of the plating till after the compensation thereof when performing plating again in a same condition.

Thus, although the most preferred embodiment of the present invention is described in detail, referring to the drawings, the invention is not limited thereto, and a variation is appropriately available without departing from the spirit and scope of the invention.

For example, although the plating internal stress measurement system 1 related to the present invention provides a film thickness expectation function, the plating internal stress measurement program related to the invention may not comprise such the function.

In addition, although the plating internal stress measurement system 1 related to the present invention provides a plating condition change function, the plating internal stress measurement program related to the invention may not comprise such the function.

Furthermore, although the plating internal stress measurement system 1 related to the present invention is configured so that actual plating weight is input as a compensation condition and so that current efficiency is calculated from this value when calculating the film thickness and the plating internal stress, it is not limited thereto: the system 1 may be configured so that an actual plating film thickness is input and so that the current efficiency can be directly input.

Still furthermore, although the plating internal stress measurement system 1 related to the present invention is configured so as to comprise the ampere meter 31 and the strain indicator 32 within the power source unit 30, it is not limited thereto: if a current passing between electrodes is measurable and a strain of the cathode plate C is measurable by the strain gauge HG, any system can use the plating internal stress measurement program related to the present invention.

## Claims

**1.** In a plating internal stress measurement system (1), in order to measure a plating internal stress, a plating internal stress measurement program for making a computer (10) function as:

a plating condition input mechanism for inputting a plating condition;
a calculation formula data memory mechanism that memorizes in advance film thickness calculation formula data for calculating a plating film thickness from the plating condition and the current data, and stress calculation formula data for calculating a plating internal stress from the plating film thickness, which is calculated according to the film thickness from the plating condition, and strain data;
a film thickness calculation mechanism for reading the film thickness calculation formula data from the calculation formula memory mechanism and calculating the plating film thickness at each timing during plating, based on the plating condition and the current data at the each timing during the plating;
a stress calculation mechanism for reading the stress calculation formula data from the calculation formula memory mechanism and calculating the plating internal stress at the each timing during the plating, based on the plating condition, the strain data at the each timing during the plating, and the calculated film thickness data;
a stress data memory mechanism for memorizing the plating internal stress, which is calculated at the each timing during the plating by the stress calculation mechanism, as stress data; and
a stress output mechanism for outputting the plating internal stress calculated at the each timing during the plating by the stress calculation mechanism,

wherein said plating internal stress measurement system that comprises a plating tank (20) for reserving plating liquid; a cathode plate (C) and an anode plate (A) immersed in said plating liquid; a power source unit (30) for passing a current through said cathode plate and said anode plate; an ampere meter (31) for measuring the current passed through said cathode plate and said anode plate and obtaining the current at the each timing during the plating as current data; a strain gauge (HG) attached to a back face of a plated portion formed on said cathode plate; a strain indicator (32) that is connected to said strain gauge, measures a strain amount of said cathode plate, and obtains the strain amount at the each timing during the plating as strain data; and said computer connected to said ampere meter and said strain indicator.

**2.** A plating internal stress measurement program of claim 1 for making said computer function as:

a compensation condition input mechanism for inputting a compensation condition based on any actual measurement value of a plating film thickness and plating film weight after completion of plating;
a compensation formula data memory mechanism for memorizing in advance compensation data for compensating said plating internal stress, based on said compensation condition;
a stress compensation mechanism for reading said compensation formula data from said compensation formula data memory mechanism and compensating said plating internal stress at each timing during plating calculated by said stress calculation mechanism, based on said compensation condition;
a compensation stress data memory mechanism for memorizing said plating internal stress, which is compensated at the each timing during the plating by said stress compensation mechanism, as compensation stress data; and

a compensation stress output mechanism for outputting said plating internal stress at the each timing during the plating compensated by said stress compensation mechanism.

**3.** A plating internal stress measurement system comprising:

a plating tank for reserving plating liquid;

a cathode plate and an anode plate immersed in said plating liquid;

a power source unit for passing a current through said cathode plate and said anode plate;

an ampere meter for measuring the current passed through said cathode plate and said anode plate and obtaining the current at each timing during plating as current data;

a strain gauge attached to a back face of a plated portion formed on said cathode plate;

a strain indicator that is connected to said strain gauge, measures a strain amount of said cathode plate, and obtains the strain amount at the each timing during the plating as strain data;

a plating condition input mechanism for inputting a plating condition;

a calculation formula data memory mechanism that memorizes in advance film thickness calculation formula data for calculating a plating film thickness from said plating condition and said current data, and stress calculation formula data for calculating a plating internal stress from the plating film thickness, which is calculated according to the film thickness calculation formula, and said strain data;

a film thickness calculation mechanism for reading said film thickness calculation formula data from said calculation formula memory mechanism and calculating a plating film thickness at the each timing during the plating, based on said plating condition and said current data at the each timing during the plating;

a stress calculation mechanism for reading said stress calculation formula data from said calculation formula memory mechanism and calculating a plating internal stress at the each timing during the plating, based on said plating condition, said strain data at the each timing during the plating, and film thickness data calculated by said film thickness calculation mechanism;

a stress data memory mechanism for memorizing the plating internal stress, which is calculated at the each timing during the plating by said stress calculation mechanism, as stress data; and

a stress output mechanism for outputting the plating internal stress calculated at the each timing during the plating by the stress calculation mechanism; and

a control mechanism for controlling each of the mechanisms.

**4.** A plating internal stress measurement system of claim 3 comprising:

a compensation condition input mechanism for inputting a compensation condition based on any actual measurement value of a plating film thickness and plating film weight after completion of plating;

a compensation formula data memory mechanism for memorizing in advance compensation data for compensating said plating internal stress, based on said compensation condition;

a stress compensation mechanism for reading said compensation formula data from said compensation formula data memory mechanism and compensating said plating internal stress calculated by said stress calculation mechanism at each timing during plating, based on said compensation condition;

a compensation stress data memory mechanism for memorizing said plating internal stress compensated by said stress compensation mechanism at the each timing during the plating, as compensation stress data; and

a compensation stress output mechanism for outputting said plating internal stress compensated by said stress compensation mechanism at the each timing during the plating.

FIG.1

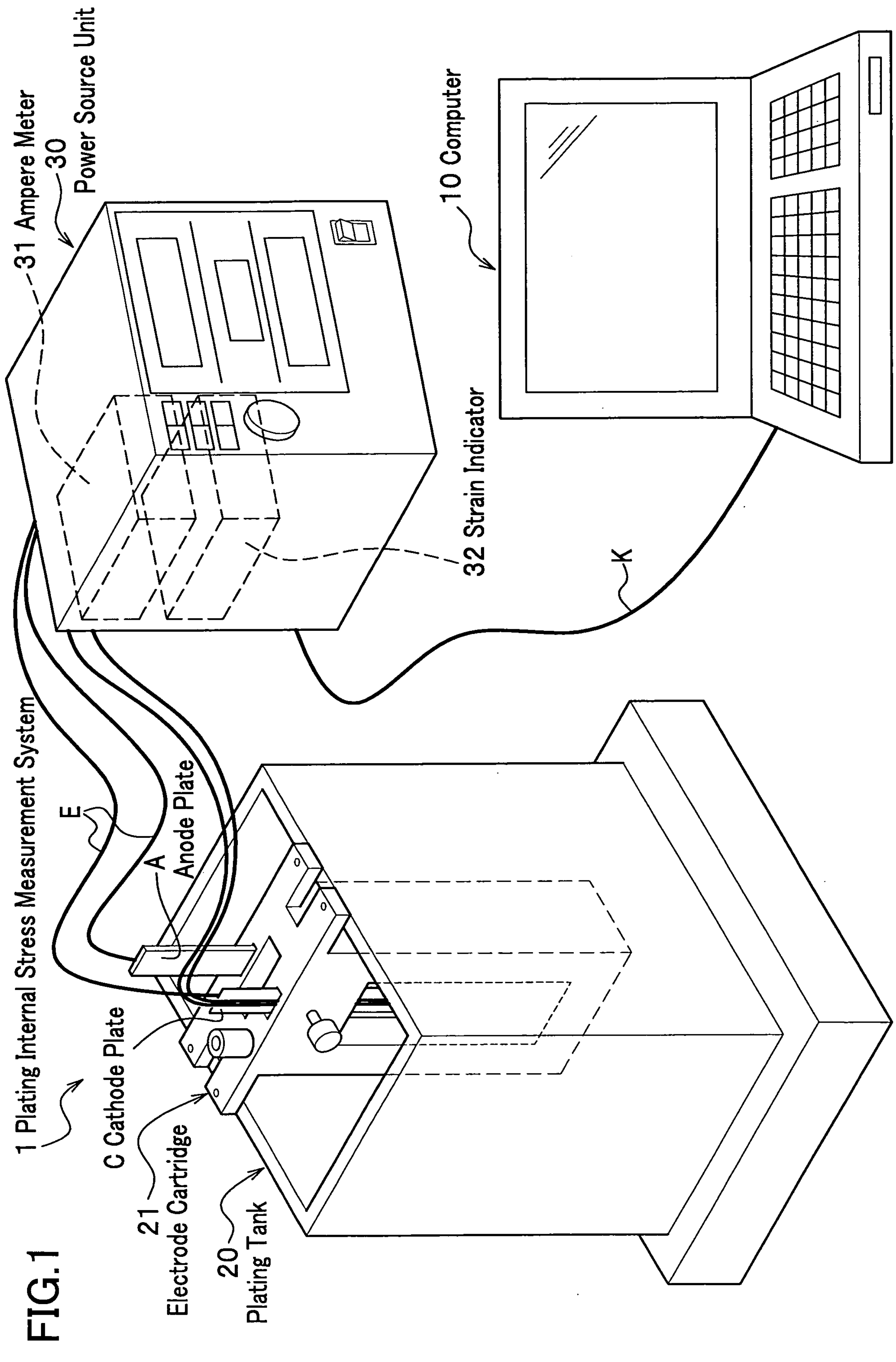
1 Plating Internal Stress Measurement System
C Cathode Plate
21 Electrode Cartridge
20 Plating Tank
A Anode Plate
E
31 Ampere Meter
30 Power Source Unit
32 Strain Indicator
K
10 Computer

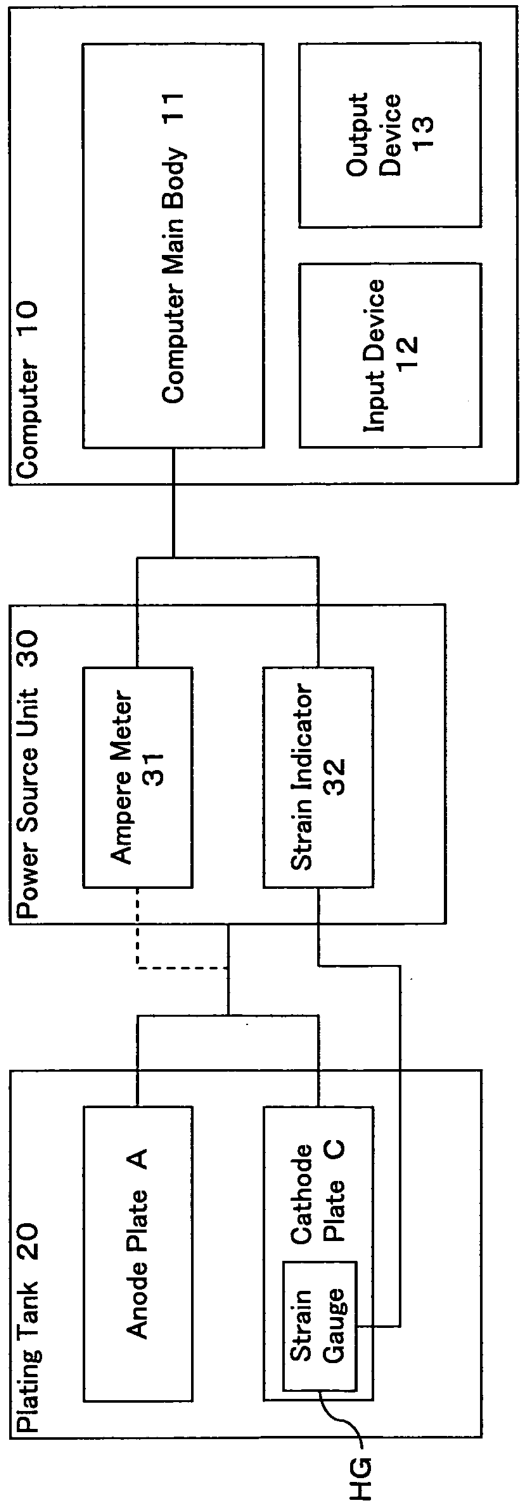
Computer 10
Computer Main Body 11
Input Device 12
Output Device 13
Power Source Unit 30
Ampere Meter 31
Strain Indicator 32
Plating Tank 20
Anode Plate A
Cathode Plate C
Strain Gauge
HG

FIG. 2

FIG. 3

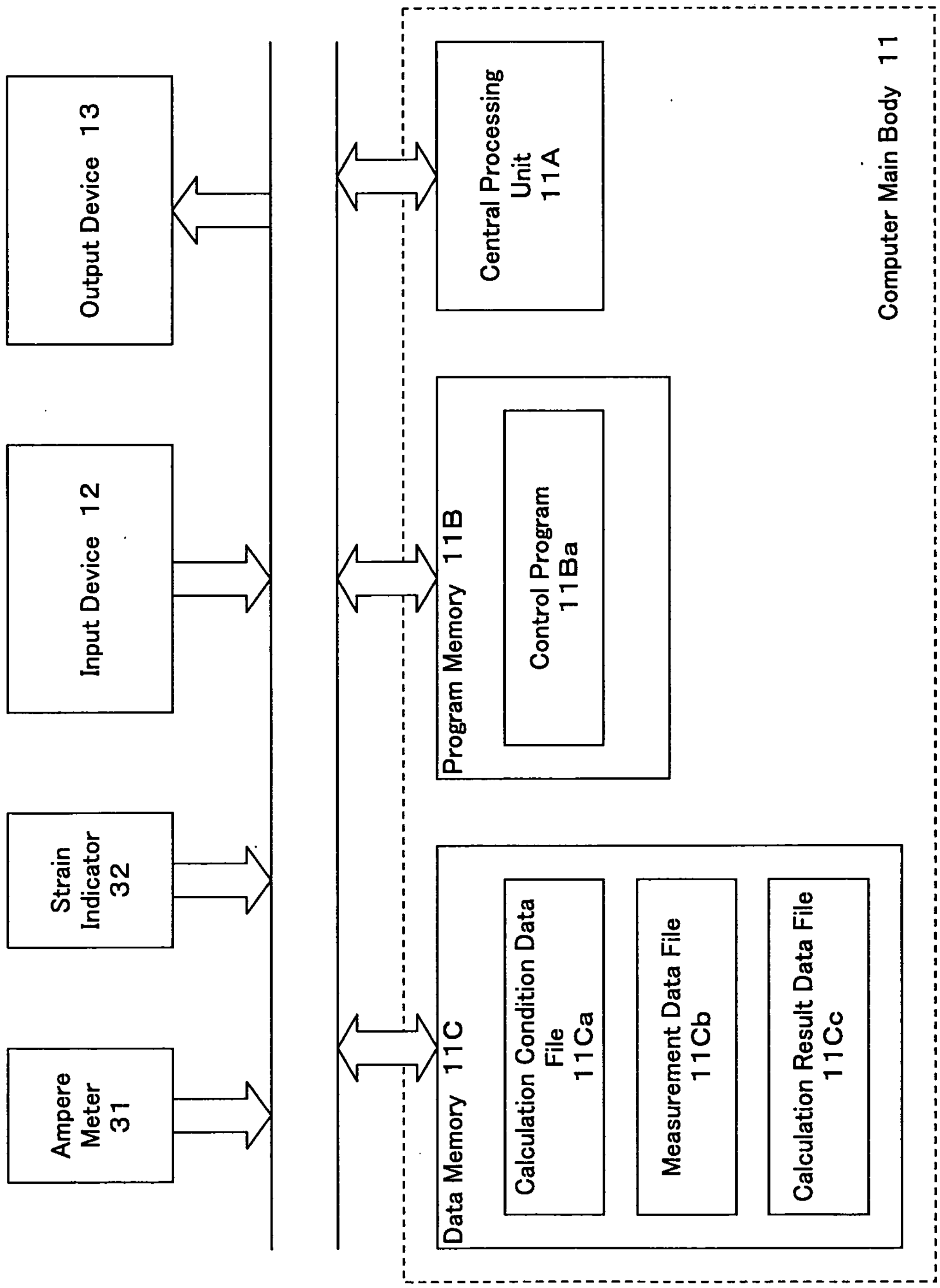
Ampere Meter 31
Strain Indicator 32
Input Device 12
Output Device 13
Data Memory 11C
Calculation Condition Data File 11Ca
Measurement Data File 11Cb
Calculation Result Data File 11Cc
Program Memory 11B
Control Program 11Ba
Central Processing Unit 11A
Computer Main Body 11

FIG. 4

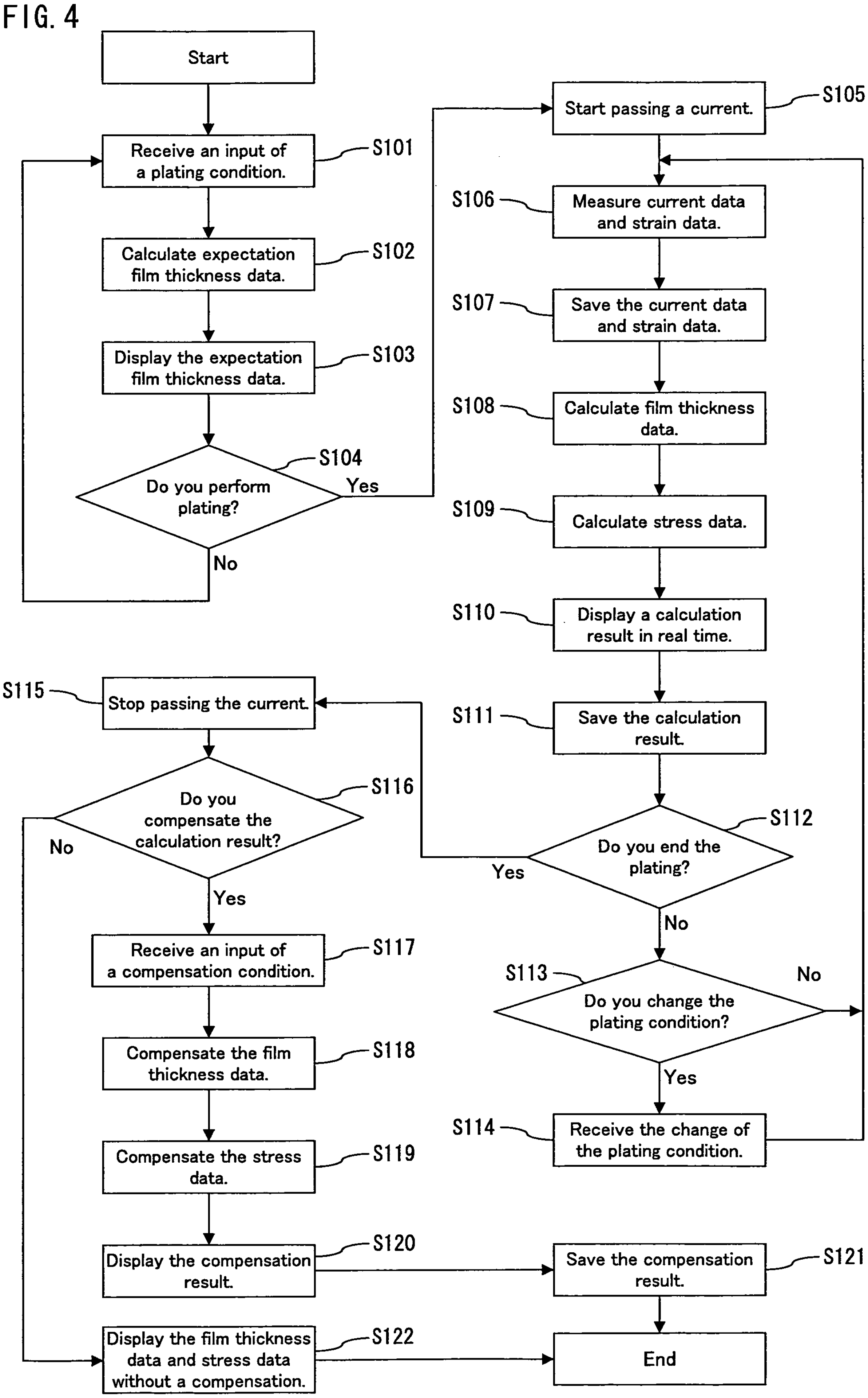
Start
Receive an input of a plating condition.
S101
Calculate expectation film thickness data.
S102
Display the expectation film thickness data.
S103
Do you perform plating?
S104
Yes
No
Start passing a current.
S105
Measure current data and strain data.
S106
Save the current data and strain data.
S107
Calculate film thickness data.
S108
Calculate stress data.
S109
Display a calculation result in real time.
S110
Save the calculation result.
S111
Do you end the plating?
S112
Yes
No
Do you change the plating condition?
S113
No
Yes
Receive the change of the plating condition.
S114
Stop passing the current.
S115
Do you compensate the calculation result?
S116
No
Yes
Receive an input of a compensation condition.
S117
Compensate the film thickness data.
S118
Compensate the stress data.
S119
Display the compensation result.
S120
Save the compensation result.
S121
Display the film thickness data and stress data without a compensation.
S122
End

FIG.5

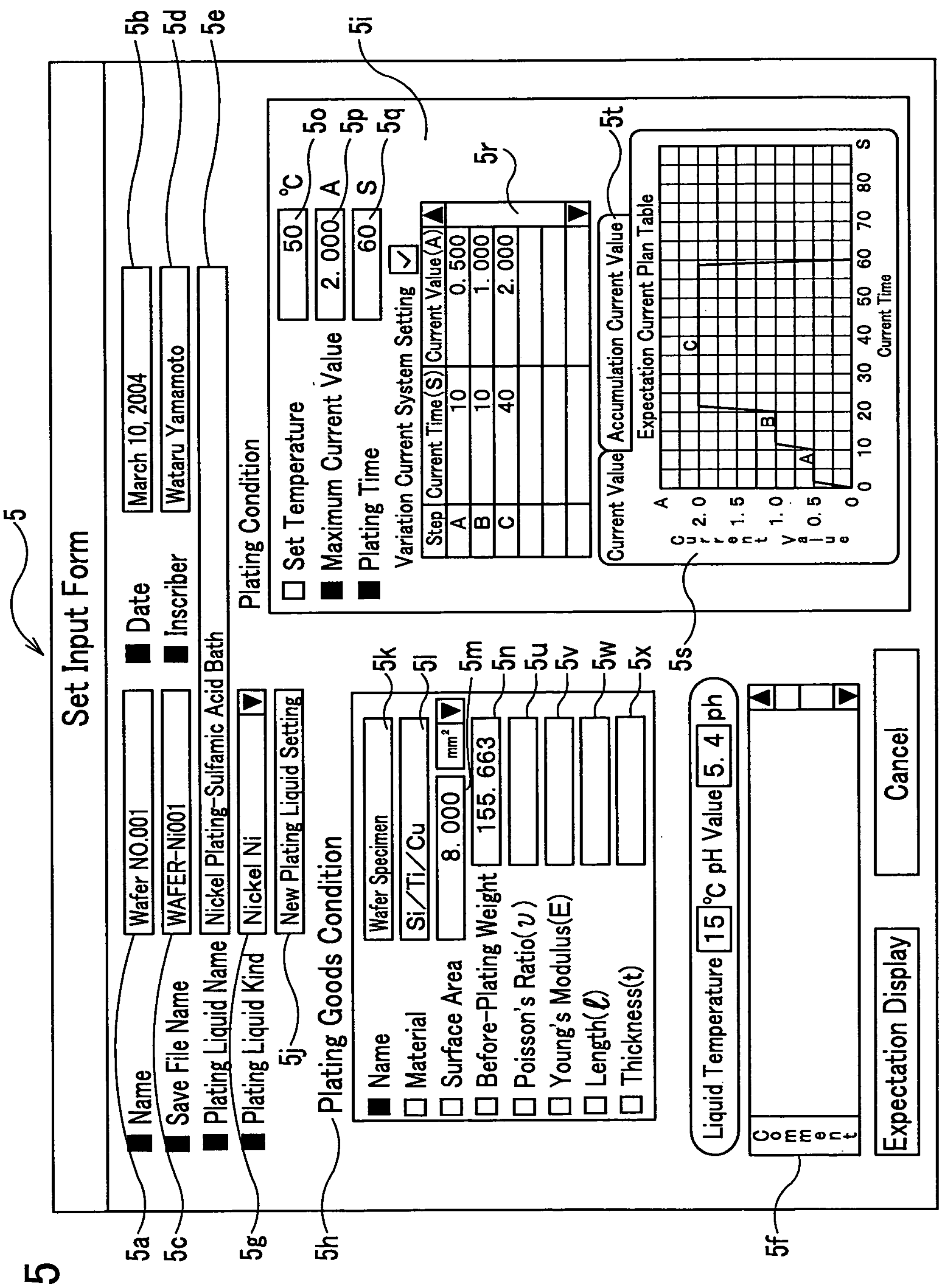
5
Set Input Form
Name
Wafer NO.001
Date
March 10, 2004
Save File Name
WAFER-Ni001
Inscriber
Wataru Yamamoto
Plating Liquid Name
Nickel Plating-Sulfamic Acid Bath
Plating Liquid Kind
Nickel Ni
New Plating Liquid Setting
Plating Goods Condition
Name
Wafer Specimen
Material
Si/Ti/Cu
Surface Area
8. 000
mm²
Before-Plating Weight
155. 663
Poisson's Ratio(ν)
Young's Modulus(E)
Length(ℓ)
Thickness(t)
Plating Condition
Set Temperature
50
°C
Maximum Current Value
2. 000
A
Plating Time
60
S
Variation Current System Setting
Step
Current Time(S)
Current Value(A)
A
10
0. 500
B
10
1. 000
C
40
2. 000
Current Value
Accumulation Current Value
Expectation Current Plan Table
Current Value
A
2. 0
1. 5
1. 0
0. 5
0
0
10
20
30
40
50
60
70
80
S
Current Time
Liquid Temperature
15
°C pH Value
5. 4
ph
Comment
Expectation Display
Cancel
5a
5b
5c
5d
5e
5f
5g
5h
5i
5j
5k
5l
5m
5n
5o
5p
5q
5r
5s
5t
5u
5v
5w
5x

FIG.6A

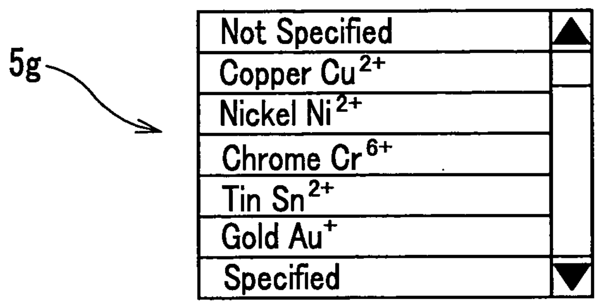


FIG.6B

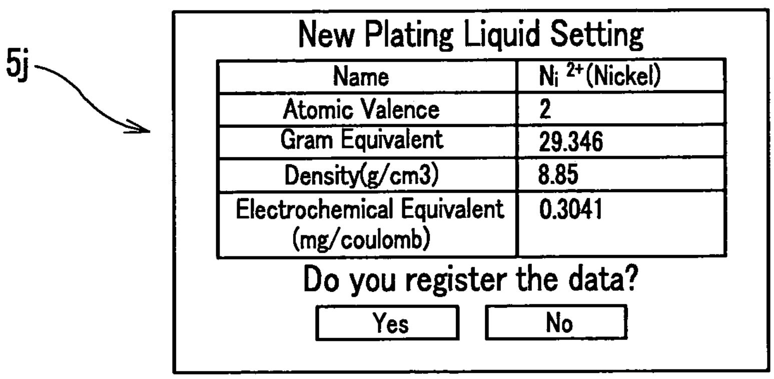


FIG.6C

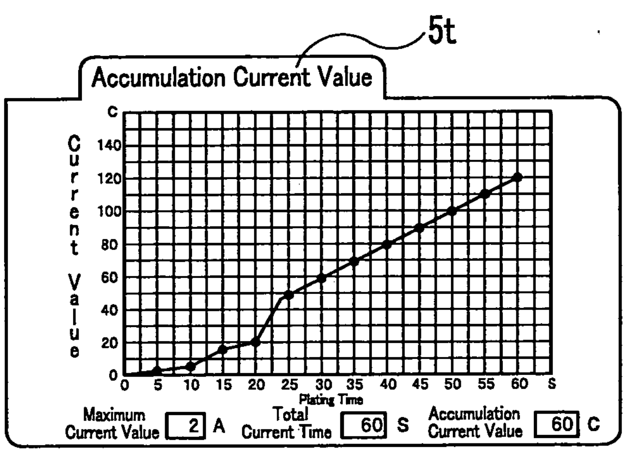

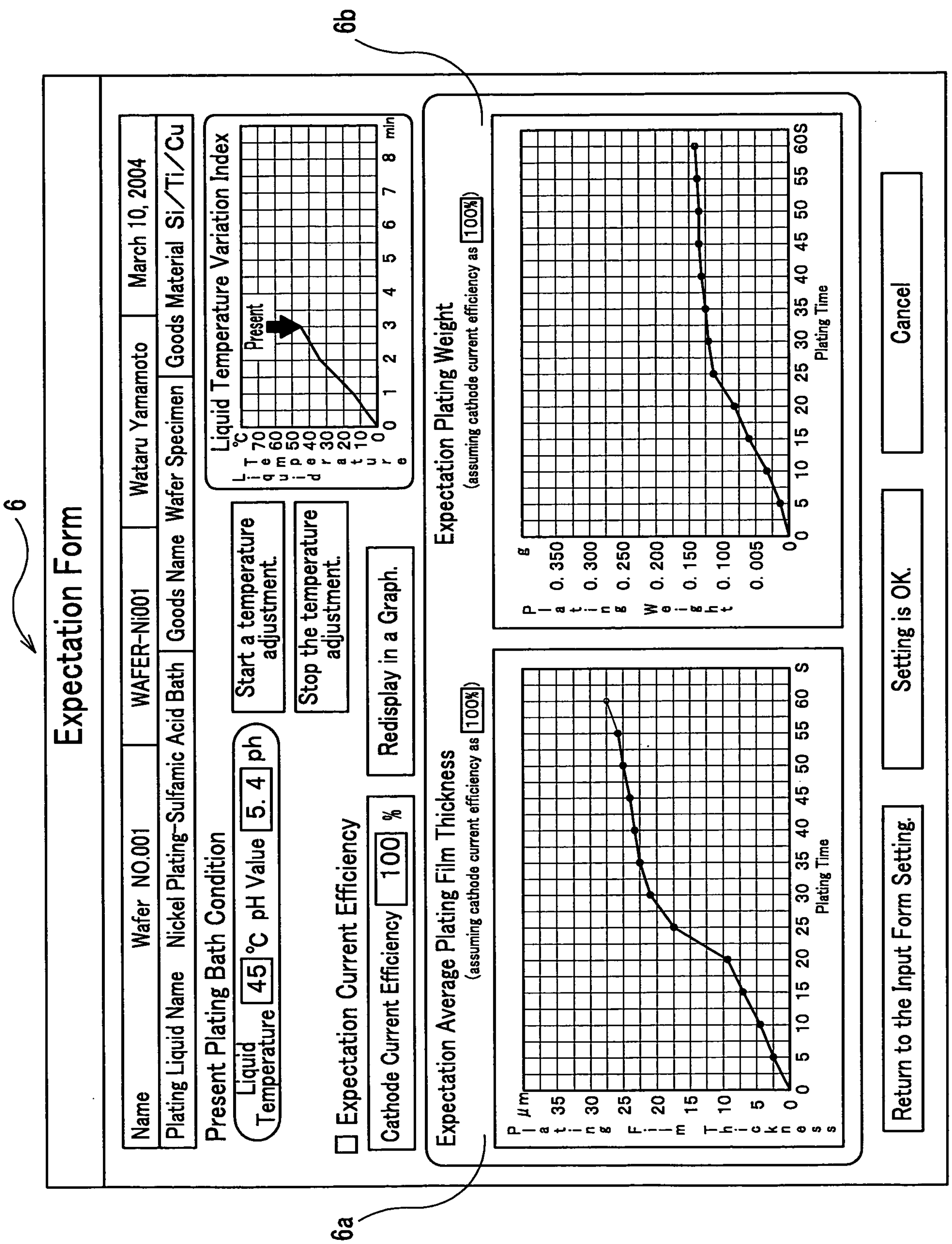
6
6a
6b
Expectation Form
Name
Wafer NO.001
Wataru Yamamoto
March 10, 2004
Plating Liquid Name
Nickel Plating-Sulfamic Acid Bath
Goods Name
WAFER-Ni001
Wafer Specimen
Goods Material
Si/Ti/Cu
Present Plating Bath Condition
Liquid Temperature
45
°C
pH Value
5.4
ph
Start a temperature adjustment.
Stop the temperature adjustment.
Liquid Temperature Variation Index
Liquid Temperature °C
70 60 50 40 30 20 10 0
Present
0 1 2 3 4 5 6 7 8 min
Expectation Current Efficiency
Cathode Current Efficiency
100
%
Redisplay in a Graph.
Expectation Average Plating Film Thickness
(assuming cathode current efficiency as 100%)
Plating Film Thickness
μm
35 30 25 20 15 10 5 0
0 5 10 15 20 25 30 35 40 45 50 55 60 S
Plating Time
Expectation Plating Weight
(assuming cathode current efficiency as 100%)
Plating Weight
g
0.350 0.300 0.250 0.200 0.150 0.100 0.005 0
0 5 10 15 20 25 30 35 40 45 50 55 60S
Plating Time
Return to the Input Form Setting.
Setting is OK.
Cancel

FIG.7

FIG.8

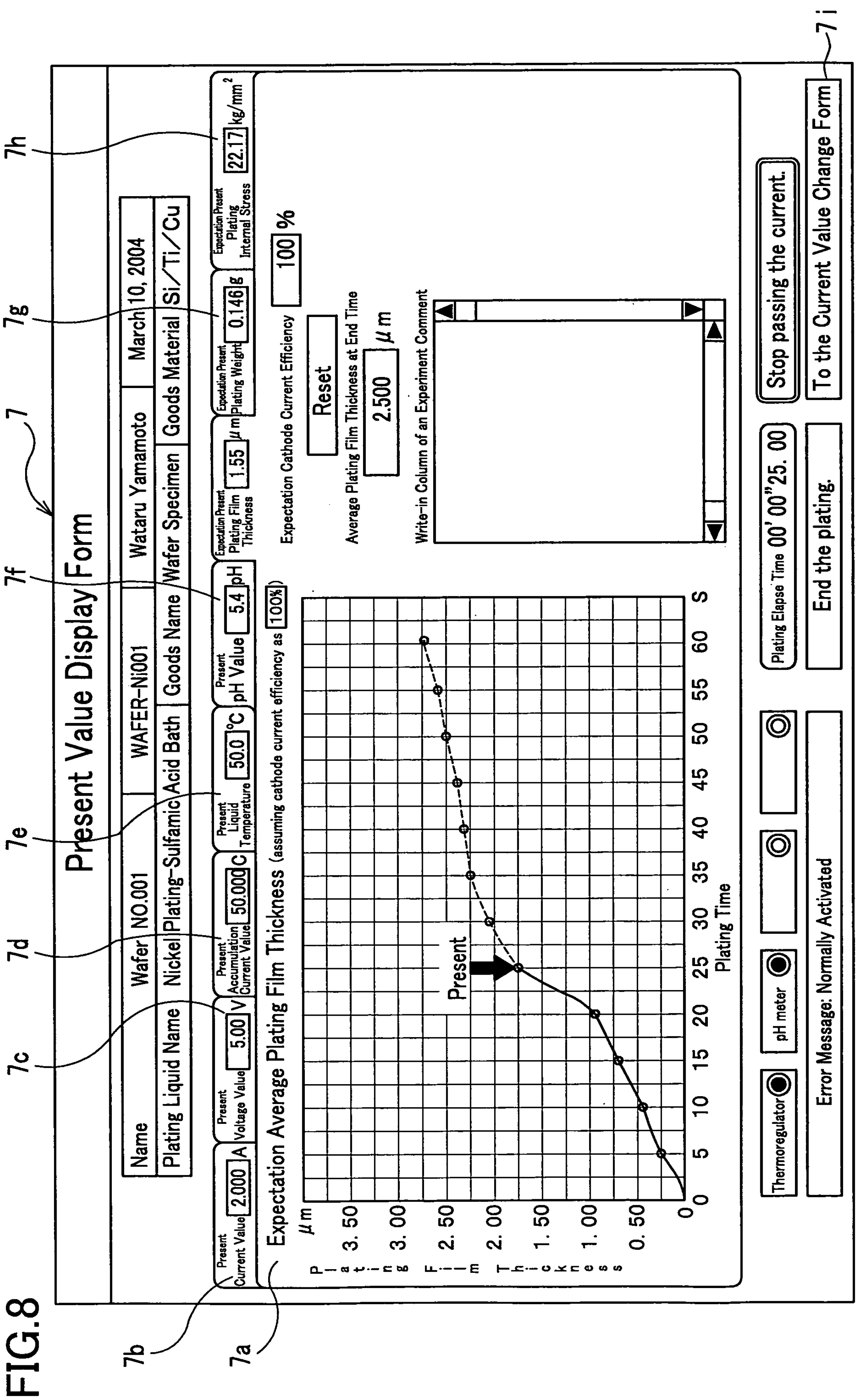

Present Value Display Form
7
Name
Wafer NO.001
WAFER-Ni001
Wataru Yamamoto
March 10, 2004
Plating Liquid Name
Nickel Plating-Sulfamic Acid Bath
Goods Name
Wafer Specimen
Goods Material
Si/Ti/Cu
Present Current Value 2.000 A
Present Voltage Value 5.00 V
Present Accumulation Current Value 50.000 C
Present Liquid Temperature 50.0 °C
Present pH Value 5.4 pH
Expectation Present Plating Film Thickness 1.55 μm
Expectation Present Plating Weight 0.146 g
Expectation Present Plating Internal Stress 22.17 kg/mm²
Expectation Average Plating Film Thickness (assuming cathode current efficiency as 100%)
μm
3. 50
3. 00
2. 50
2. 00
1. 50
1. 00
0. 50
0
Plating Film Thickness
0 5 10 15 20 25 30 35 40 45 50 55 60 S
Plating Time
Present
Expectation Cathode Current Efficiency 100 %
Reset
Average Plating Film Thickness at End Time
2.500 μm
Write-in Column of an Experiment Comment
Thermoregulator
pH meter
Plating Elapse Time 00'00"25. 00
Stop passing the current.
Error Message: Normally Activated
End the plating.
To the Current Value Change Form
7a
7b
7c
7d
7e
7f
7g
7h
7i

FIG.9

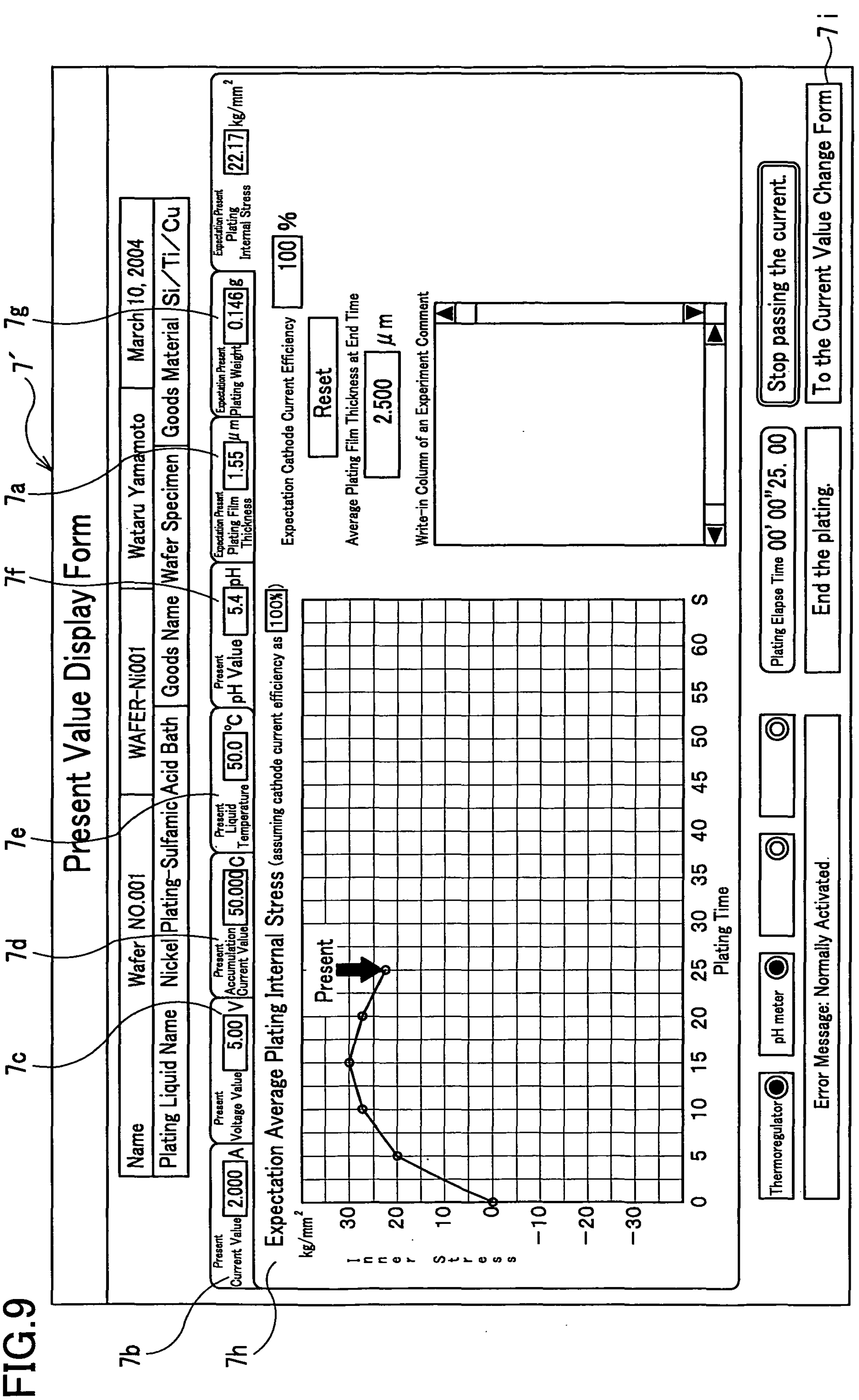
7′
7a
7b
7c
7d
7e
7f
7g
7h
7i
Present Value Display Form
Name
Wafer NO.001
WAFER-Ni001
Wataru Yamamoto
March 10, 2004
Plating Liquid Name
Nickel Plating-Sulfamic Acid Bath
Goods Name
Wafer Specimen
Goods Material
Si/Ti/Cu
Present Current Value
2.000 A
Present Voltage Value
5.00 V
Present Accumulation Current Value
50.000 C
Present Liquid Temperature
50.0 °C
Present pH Value
5.4 pH
Expectation Present Plating Film Thickness
1.55 μm
Expectation Present Plating Weight
0.146 g
Expectation Present Plating Internal Stress
22.17 kg/mm²
Expectation Average Plating Internal Stress (assuming cathode current efficiency as 100%)
kg/mm²
Inner Stress
30
20
10
0
−10
−20
−30
Present
0 5 10 15 20 25 30 35 40 45 50 55 60 65
Plating Time
S
Expectation Cathode Current Efficiency
100 %
Reset
Average Plating Film Thickness at End Time
2.500 μm
Write-in Column of an Experiment Comment
Thermoregulator
pH meter
Plating Elapse Time 00′00″25.00
Stop passing the current.
Error Message: Normally Activated.
End the plating.
To the Current Value Change Form

FIG.10

9

## Calculation Result Numeric Form

| Name | Wafer NO.001 | WAFER-Ni001 | Wataru Yamamoto | March 10, 2004 |
|---|---|---|---|---|
| Plating Liquid Name | Nickel Plating-Sulfamic Acid Bath | Goods Name Wafer Specimen | Goods Material Si/Ti/Cu | |

| Plating Time(S) | Current Value(A) | Voltage Value(V) | Accumulation Current Value(C) | Liquid Temperature(℃) | pH Value(pH) | Film Thickness(μm) | Plating Weight(g) | Plating Internal Stress (kg/mm²) |
|---|---|---|---|---|---|---|---|---|
| 0 | XXXX | XXXX | XXXX | XXXX | XXXX | XXXX | XXXX | XXXX |
| 1 | XXXX | XXXX | XXXX | XXXX | XXXX | XXXX | XXXX | XXXX |
| 2 | XXXX | XXXX | XXXX | XXXX | XXXX | XXXX | XXXX | XXXX |
| 3 | XXXX | XXXX | XXXX | XXXX | XXXX | XXXX | XXXX | XXXX |
| 4 | XXXX | XXXX | XXXX | XXXX | XXXX | XXXX | XXXX | XXXX |
| 5 | XXXX | XXXX | XXXX | XXXX | XXXX | XXXX | XXXX | XXXX |
| 6 | XXXX | XXXX | XXXX | XXXX | XXXX | XXXX | XXXX | XXXX |
| 7 | XXXX | XXXX | XXXX | XXXX | XXXX | XXXX | XXXX | XXXX |
| 8 | XXXX | XXXX | XXXX | XXXX | XXXX | XXXX | XXXX | XXXX |
| 9 | XXXX | XXXX | XXXX | XXXX | XXXX | XXXX | XXXX | XXXX |
| 10 | XXXX | XXXX | XXXX | XXXX | XXXX | XXXX | XXXX | XXXX |
| 11 | XXXX | XXXX | XXXX | XXXX | XXXX | XXXX | XXXX | XXXX |
| 12 | XXXX | XXXX | XXXX | XXXX | XXXX | XXXX | XXXX | XXXX |
| 13 | XXXX | XXXX | XXXX | XXXX | XXXX | XXXX | XXXX | XXXX |
| 14 | XXXX | XXXX | XXXX | XXXX | XXXX | XXXX | XXXX | XXXX |
| 15 | XXXX | XXXX | XXXX | XXXX | XXXX | XXXX | XXXX | XXXX |
| 16 | XXXX | XXXX | XXXX | XXXX | XXXX | XXXX | XXXX | XXXX |
| 17 | XXXX | XXXX | XXXX | XXXX | XXXX | XXXX | XXXX | XXXX |
| 18 | XXXX | XXXX | XXXX | XXXX | XXXX | XXXX | XXXX | XXXX |
| 19 | XXXX | XXXX | XXXX | XXXX | XXXX | XXXX | XXXX | XXXX |
| 20 | XXXX | XXXX | XXXX | XXXX | XXXX | XXXX | XXXX | XXXX |
| 21 | XXXX | XXXX | XXXX | XXXX | XXXX | XXXX | XXXX | XXXX |
| 22 | XXXX | XXXX | XXXX | XXXX | XXXX | XXXX | XXXX | XXXX |
| 23 | XXXX | XXXX | XXXX | XXXX | XXXX | XXXX | XXXX | XXXX |
| 24 | XXXX | XXXX | XXXX | XXXX | XXXX | XXXX | XXXX | XXXX |
| 25 | XXXX | XXXX | XXXX | XXXX | XXXX | XXXX | XXXX | XXXX |
| 26 | XXXX | XXXX | XXXX | XXXX | XXXX | XXXX | XXXX | XXXX |
| 27 | XXXX | XXXX | XXXX | XXXX | XXXX | XXXX | XXXX | XXXX |
| 28 | XXXX | XXXX | XXXX | XXXX | XXXX | XXXX | XXXX | XXXX |
| 29 | XXXX | XXXX | XXXX | XXXX | XXXX | XXXX | XXXX | XXXX |
| 30 | XXXX | XXXX | XXXX | XXXX | XXXX | XXXX | XXXX | XXXX |
| 31 | XXXX | XXXX | XXXX | XXXX | XXXX | XXXX | XXXX | XXXX |

Save in the CSV Format

FIG.11

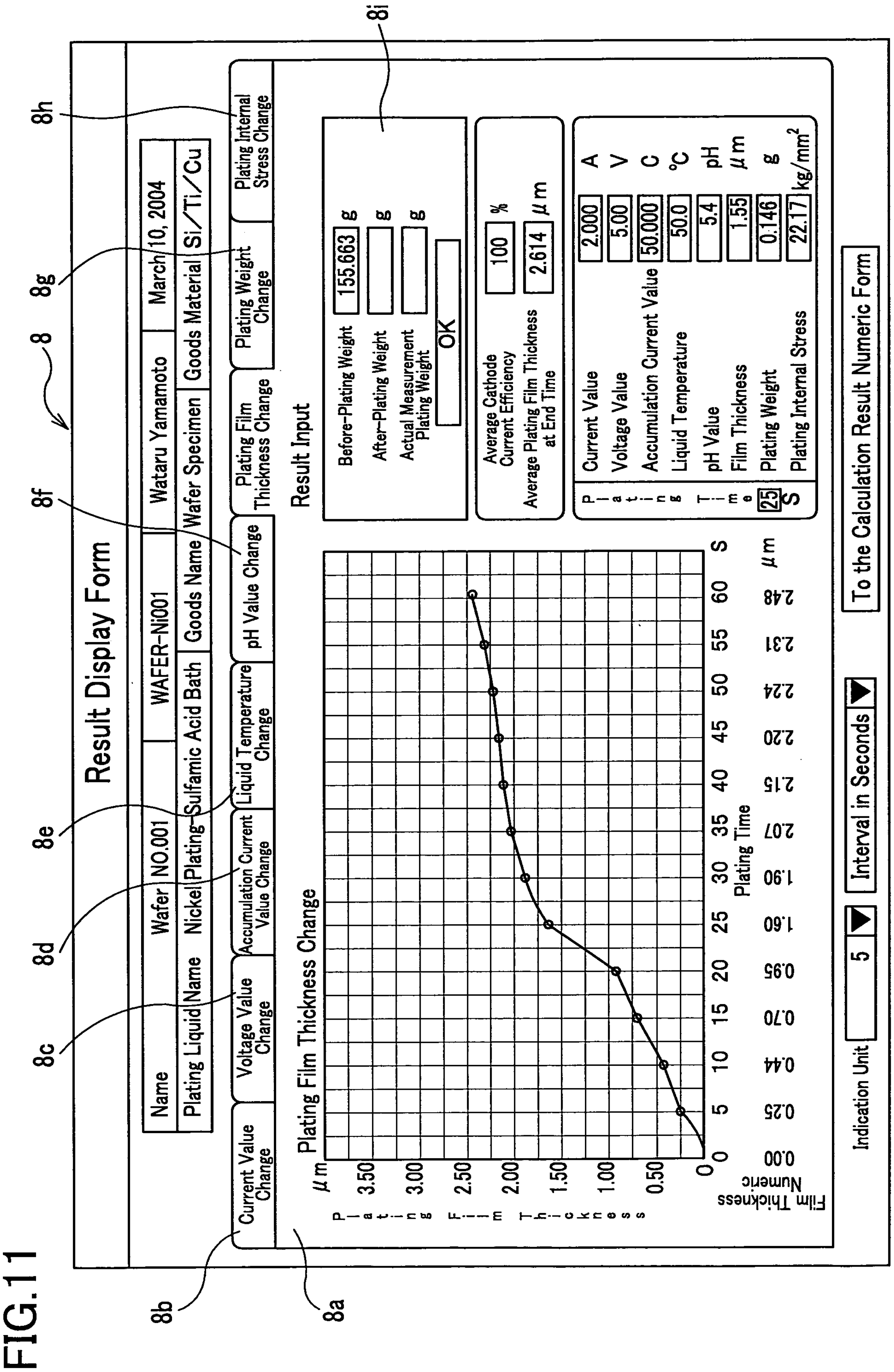

8
8a
8b
8c
8d
8e
8f
8g
8h
8i
Result Display Form
Name
Wafer
NO.001
WAFER-Ni001
Wataru Yamamoto
March 10, 2004
Plating Liquid Name
Nickel Plating-Sulfamic Acid Bath
Goods Name
Wafer Specimen
Goods Material
Si/Ti/Cu
Current Value Change
Voltage Value Change
Accumulation Current Value Change
Liquid Temperature Change
pH Value Change
Plating Film Thickness Change
Plating Weight Change
Plating Internal Stress Change
Plating Film Thickness Change
μm
3.50
3.00
2.50
2.00
1.50
1.00
0.50
0
Plating Film Thickness
0 5 10 15 20 25 30 35 40 45 50 55 60 S
Plating Time
Film Thickness Numeric
0.00 0.25 0.44 0.70 0.95 1.60 1.90 2.07 2.15 2.20 2.24 2.31 2.48 μm
Indication Unit
5
Interval in Seconds
Result Input
Before-Plating Weight
155.663 g
After-Plating Weight
g
Actual Measurement Plating Weight
g
OK
Average Cathode Current Efficiency
100 %
Average Plating Film Thickness at End Time
2.614 μm
Plating Time
25 S
Current Value 2.000 A
Voltage Value 5.00 V
Accumulation Current Value 50.000 C
Liquid Temperature 50.0 °C
pH Value 5.4 pH
Film Thickness 1.55 μm
Plating Weight 0.146 g
Plating Internal Stress 22.17 kg/mm2
To the Calculation Result Numeric Form

FIG.12

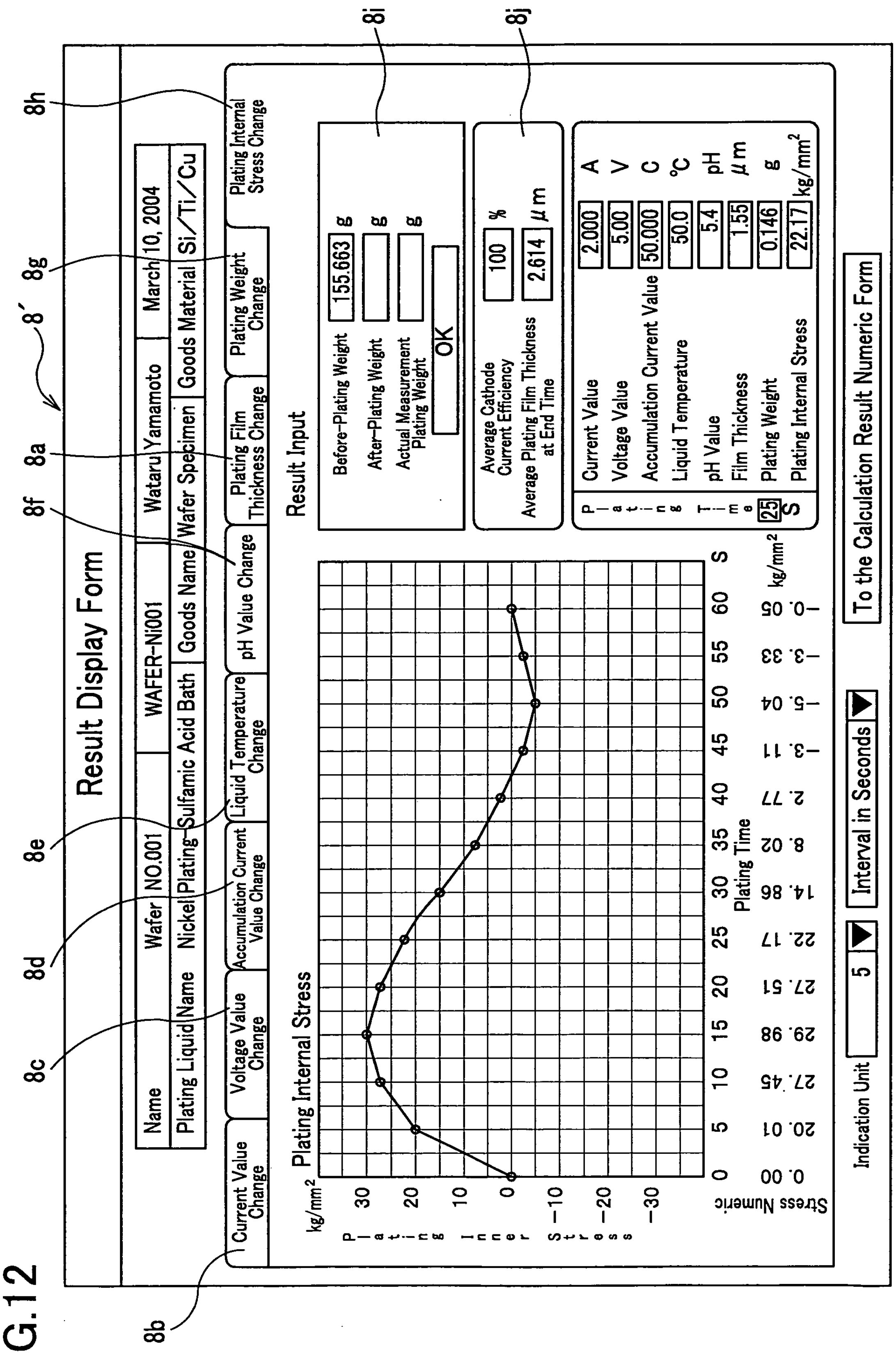
Result Display Form
Name
Wafer NO.001
WAFER-Ni001
Wataru Yamamoto
March 10, 2004
Plating Liquid Name
Nickel Plating Sulfamic Acid Bath
Goods Name
Wafer Specimen
Goods Material
Si/Ti/Cu
Current Value Change
Voltage Value Change
Accumulation Current Value Change
Liquid Temperature Change
pH Value Change
Plating Film Thickness Change
Plating Weight Change
Plating Internal Stress Change
Plating Internal Stress
kg/mm²
Plating Inner Stress
30
20
10
0
-10
-20
-30
0 5 10 15 20 25 30 35 40 45 50 55 60 S
Plating Time
Stress Numeric
0.00 20.01 27.45 29.98 27.51 22.17 14.86 8.02 2.77 -3.11 -5.04 -3.33 -0.05 kg/mm²
Result Input
Before-Plating Weight 155.663 g
After-Plating Weight g
Actual Measurement Plating Weight g
OK
Average Cathode Current Efficiency 100 %
Average Plating Film Thickness at End Time 2.614 μm
Plating Time 25 S
Current Value 2.000 A
Voltage Value 5.00 V
Accumulation Current Value 50.000 C
Liquid Temperature 50.0 °C
pH Value 5.4 pH
Film Thickness 1.55 μm
Plating Weight 0.146 g
Plating Internal Stress 22.17 kg/mm²
Indication Unit 5
Interval in Seconds
To the Calculation Result Numeric Form
8´
8a
8b
8c
8d
8e
8f
8g
8h
8i
8j

FIG.13

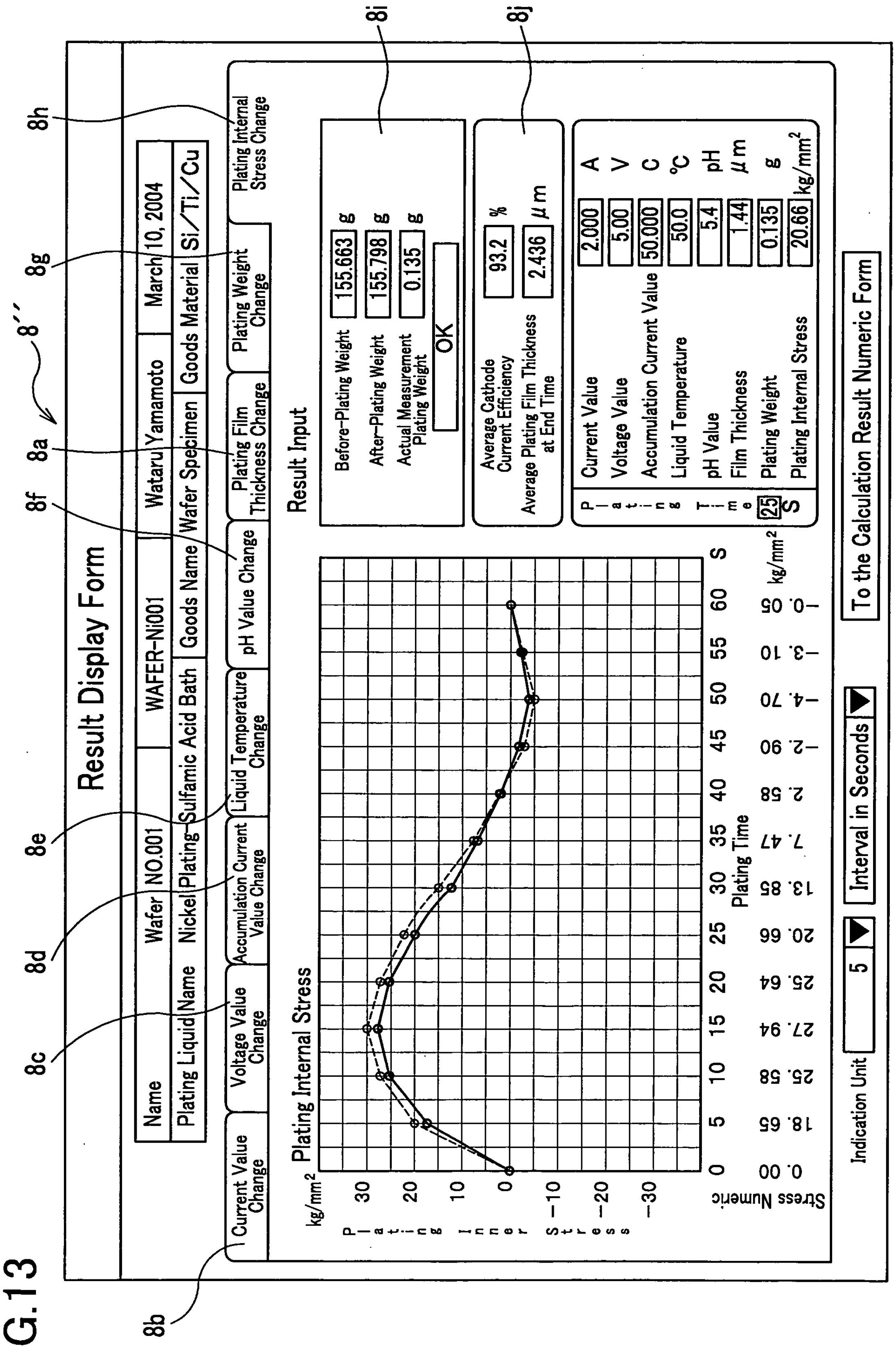
Result Display Form
Name
Wafer NO.001
WAFER-Ni001
Wataru Yamamoto
March 10, 2004
Plating Liquid Name
Nickel Plating Sulfamic Acid Bath
Goods Name
Wafer Specimen
Goods Material
Si/Ti/Cu
Current Value Change
Voltage Value Change
Accumulation Current Value Change
Liquid Temperature Change
pH Value Change
Plating Film Thickness Change
Plating Weight Change
Plating Internal Stress Change
Plating Internal Stress
kg/mm2
Plating Inner Stress
30
20
10
0
−10
−20
−30
0 5 10 15 20 25 30 35 40 45 50 55 60 S
Plating Time
Stress Numeric
0.00 18.65 25.58 27.94 25.64 20.66 13.85 7.47 2.58 −2.90 −4.70 −3.10 −0.05 kg/mm2
Result Input
Before-Plating Weight 155.663 g
After-Plating Weight 155.798 g
Actual Measurement Plating Weight 0.135 g
OK
Average Cathode Current Efficiency 93.2 %
Average Plating Film Thickness at End Time 2.436 μm
Plating Time 25 S
Current Value 2.000 A
Voltage Value 5.00 V
Accumulation Current Value 50.000 C
Liquid Temperature 50.0 °C
pH Value 5.4 pH
Film Thickness 1.44 μm
Plating Weight 0.135 g
Plating Internal Stress 20.66 kg/mm2
Indication Unit 5
Interval in Seconds
To the Calculation Result Numeric Form
8''
8a
8b
8c
8d
8e
8f
8g
8h
8i
8j